# EUROPÄISCHE PATENTSCHRIFT

(11) **EP 2 216 559 B1**
(45) Veröffentlichungstag und Bekanntmachung des Hinweises auf die Patenterteilung: **03.08.2011**
(21) Anmeldenummer: 09178149.2
(22) Anmeldetag: 07.12.2009
(51) Int. Cl.: F16C 35/04, F16C 35/067, F16C 35/077, B60S 1/16, H02K 5/16, H02K 7/08

(54) **Klemmbügel, Elektromotor sowie Scheibenwischerantrieb**
Clamp, electromotor and window wiper drive
Etrier de serrage, moteur électrique ainsi qu'entraînement d'essuie-glace

(30) Priorität: 06.02.2009 DE 102009000684
(43) Veröffentlichungstag der Anmeldung: 11.08.2010
(73) Patentinhaber: Robert Bosch GmbH, 70442 Stuttgart (DE)
(72) Erfinder: Maurer, Werner, 77815, Buehl (DE); Kastinger, Guenter, 76571, Gaggenau-Sulzbach (DE); Huesges, Mario, 77830, Buehlertal (DE); Dudek, Alexander, 77656, Offenburg (DE); Bechle, Andreas, 77815, Buehl (DE)

(56) Entgegenhaltungen:
- WO-A1-2007/119915
- US-B1- 6 288 466

## Beschreibung

### Stand der Technik

Die Erfindung betrifft einen Klemmbügel 100 (Klemmbrillen) zum axialen Sichern einer Ankerwelle eines Elektromotors gemäß dem Oberbegriff des Anspruchs 1, einen Elektromotor gemäß Anspruch 8, einen Scheibenwischerantrieb gemäß Anspruch 9 sowie die Verwendung eines Klemmbügels gemäß Anspruch 10.

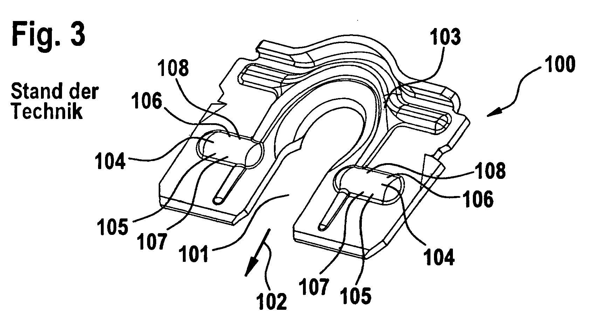

Die Serienfertigung bekannter Klemmbügel 100 (Klemmbrillen) zum axialen Sichern einer Ankerwelle eines Elektromotors ist in Fig. 3 mit dem Bezugszeichen 100 gekennzeichnet. Der bekannte Klemmbügel 100 ist als flächiges Stanzbiegeteil aus Metall ausgebildet und weist eine randseitig offene Ausnehmung 101 auf, mit der der Klemmbügel 100 in eine Montagerichtung 102 über eine Ankerwelle (nicht dargestellt) geschoben werden kann. Der Klemmbügel 100 dient zum axialen Abstützen eines äußeren Laufrings eines Kugellagers, wobei sich der äußere Laufring axial an einem gerundeten Anlagewulst 103 abstützt. Zur erleichterten Montage und zur Sicherung des Klemmbügels 100 gegen ein unbeabsichtigtes Lösen entgegen der Montagerichtung 102 ist zu beiden Seiten der Ausnehmung 101 jeweils eine Erhebung 104 angeordnet, wobei sich die Erhebungen 104 im Wesentlichen quer zur Montagerichtung 102 erstrecken. Jede Erhebung 104 weist eine in Montagerichtung 102 zeigende Anlaufseite 105 und eine entgegengesetzt gerichtete Ablaufseite 106 auf. Wie sich aus Fig. 3 ergibt, ist dabei auf jeder Anlaufseite 105 des bekannten Klemmbügels 100 eine gerundete Anlauframpe 107 realisiert, wobei sich die Anlauframpen 107, zumindest näherungsweise, über die gesamte Längserstreckung der zugehörigen Erhebung quer zur Montagerichtung 102 erstrecken. Beide Erhebungen 104 weisen eine glatte, d.h. unstrukturierte, Oberfläche auf.

Weiterhin ist aus Fig. 3 zu entnehmen, dass auf jeder Ablaufseite 106 eine ebenfalls gerundet ausgeformte Ablaufschräge 108 realisiert ist. Bei der Montage des bekannten Klemmbügels 100 in die Montagerichtung 102 kommen zunächst die Anlauframpen 107 in Kontakt mit einer umfänglichen Kante des äußeren Laufrings des Kugellagers, wodurch der Klemmbügel 100 in Richtung der Längserstreckung der Ankerwelle ausgelenkt wird. Nachdem die höchste Stelle (Scheitel) der Erhebung 104 überwunden wurde, schwenkt der Klemmbügel 100 wieder zurück, wobei der Klemmbügel 100 bei dieser Schwenkbewegung mit seiner Ablaufschräge 108 entlang der umlaufenden Kante des äußeren Laufrings gleitet. Beim Relativverschieben der Erhebungen 104 zu dem äußeren Laufring des Kugellagers kann es sowohl an den Anlauframpen 107 als auch an den Ablaufschrägen 108 aufgrund der wirkenden Flächenpressung zu einer Spanbildung kommen. Diese gilt es im Hinblick auf die Optimierung der Betriebssicherheit eines mit einem Klemmbügel 100 ausgestatteten Elektromotors, insbesondere eines Scheibenwischerantriebs, zu vermeiden.

Aus der US 6,288,466 B1 ist ein Klemmbügel für eine Ankerwelle nach dem Oberbegriff des Anspruchs 1 bekannt, bei der die Erhebungen bzw. Anlauframpen in Form von Laschen ausgebildet sind, welche durch einen Stanz-/Biegeprozess ausgebildet sind. Hier können insbesondere die Ränder der ausgestanzten Laschen eine Oberflächenstruktur in Form von Graten oder ähnliches aufweisen. Eine definierte Oberflächenstruktur zur Reduzierung bzw. Beeinflussung einer Spanbildung ist jedoch nicht offenbart.

### Offenbarung der Erfindung

Der Erfindung liegt daher die Aufgabe zugrunde, einen optimierten Klemmbügel vorzuschlagen, durch den die Gefahr von Spanbildung, selbst für den Fall der Spanbildung bei der Montage, reduziert ist. Ferner besteht die Aufgabe darin, einen Elektromotor und einen Scheibenwischerantrieb mit einem entsprechend optimierten Klemmbügel anzugeben.

Diese Aufgabe wird hinsichtlich des Klemmbügels mit den Merkmalen des Anspruchs 1, hinsichtlich des Elektromotors mit den Merkmalen des Anspruchs 7 und hinsichtlich des Scheibenwischerantriebs mit den Merkmalen des Anspruchs 8 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Um eine Spanbildung im Betrieb eines mit einem Klemmbügel ausgestatteten Elektromotors zukünftig zu vermeiden, schlägt die Erfindung vor, die mindestens eine seitlich der randseitigen Ausnehmung des, vorzugsweise als Stanzbiegeteil aus Metall ausgebildeten, Klemmbügels angeordnete Erhebung nicht wie im

Stand der Technik mit einer glatten, sondern mit einer strukturierten Oberfläche zu versehen. Durch die Oberflächenstruktur wird eine unkontrollierte Bildung von beliebig großen Spänen bei der Montage des Klemmbügels (Klemmbrille) vermieden. Die maximale Größe von entstehenden Spänen ist durch die Art der Oberflächenstrukturierung vorgegeben bzw. auf eine maximale Größe begrenzt. Dadurch, dass die Größe der Späne (Partikel), die beim Verklemmen des Klemmbügels auftreten können, aufgrund der Gliederung unter einer kritischen Größe bleiben, kann ein Kurzschluss zwischen mindestens zwei unmittelbar benachbarten Kontakten des Elektromotors sicher verhindert werden. Die Lösung des Problems scheint zunächst überraschend, da der Fachmann vermuten würde, dass der Klemmbügel aufgrund der Oberflächenstruktur und der damit verbundenen erhöhten Reibung nicht mehr oder nur schwer zu montieren sein dürfte. Durch die Oberflächenstrukturierung der mindestens einen Erhebung wird der ggf. entstehende Span nach endlicher Länge gebrochen und kann ggf. in Strukturvertiefungen aufgenommen und gehalten werden. Aufgrund des Vorsehens eines nach dem Konzept der Erfindung ausgebildeten Klemmbügels kann ggf. sogar auf einen zusätzlichen Kontaktschutz, wie ein Lackieren der Elektronik, verzichtet werden. Ganz besonders bevorzugt ist die Oberflächenstruktur in der Art einer Waffelstruktur bzw. Waffeleisen ausgebildet.

Erfindungsgemäβ wird dabei vorgeschlagen, dass die Oberflächenstruktur Strukturelemente aufweist, die derart dimensioniert sind, dass die maximalen Abmessungen von bei der Montage möglicherweise entstehenden Spänen geringer sind als ein minimaler Abstand zwischen mindestens zwei elektrischen, insbesondere nicht isolierten, Kontakten eines mit dem Klemmbügel versehenen Elektromotors. Anders ausgedrückt sollen die entstehenden Späne nicht größer sein als ein minimaler Abstand zwischen zwei unmittelbar benachbarten Kontakten des Elektromotors. Bevorzugt weisen die Strukturelemente hierzu einen maximalen Durchmesser von kleiner als 2mm, vorzugsweise von kleiner als 1 mm, auf.

Im Hinblick auf die Anordnung der Oberflächenstruktur gibt es verschiedene Möglichkeiten. Bevorzugt ist die Oberflächenstruktur dort vorgesehen, ganz besonders bevorzugt überall dort, wo der Klemmbügel bei der Montage im unmittelbaren Kontakt mit dem äußeren Laufring eines Wälzlagers kommt. Besonders bevorzugt befindet sich die Oberflächenstruktur auf der Anlaufseite und/oder der Ablaufseite der mindestens einen Erhebung und/oder im Bereich des Scheitels, also der höchsten Erhebungsstelle.

Ganz besonders bevorzugt ist es, wenn die Oberflächenstruktur nicht unregelmäßig, sondern regelmäßig ist. Beispielsweise können rechteckig oder quadratisch konturierte Strukturelemente vorgesehen sein. Anders ausgedrückt ist die Oberflächenstruktur bevorzugt aus einer Vielzahl von, zumindest näherungsweise, identischen Strukturelementen gebildet.

Zur Ausbildung der Oberflächenstruktur gibt es unterschiedliche Möglichkeiten. Ganz besonders bevorzugt ist es, wenn die Oberflächenstruktur der Erhebung bei einem Stanzbiegeprozess zur Herstellung des Klemmbügels, insbesondere mechanisch, beispielsweise durch Prägen, Strahlen, vorzugsweise Kugel- oder Sandstrahlen, eingebracht wird. Auch ist es möglich, die Oberflächenstruktur durch Bürsten einzubringen. Ebenso kann die Oberflächenstruktur nichtmechanisch, beispielsweise durch Laserbearbeitung und/oder chemisch, vorzugsweise durch Ätzen, eingebracht werden.

Besonders zweckmäßig ist eine Ausführungsform, bei der der Klemmbügel nicht nur eine einzige, sondern zwei Erhebungen aufweist, wobei es weiter bevorzugt ist, wenn beide Erhebungen jeweils mit einer Oberflächenstruktur versehen sind. Noch weiter bevorzugt sind die Erhebungen samt Oberflächenstrukturen spiegelsymmetrisch ausgebildet und angeordnet.

Die Erfindung führt auch auf einen Elektromotor, vorzugsweise für einen Scheibenwischerantrieb, bzw. auf einen Scheibenwischerantrieb mit einem Elektromotor, wobei der Elektromotor mit einem wie zuvor beschrieben ausgebildeten Klemmbügel ausgestattet ist, an dem sich in axialer Richtung ein äußerer Laufring eines Wälzlagers, insbesondere eines Kugellagers, abstützt. Ganz besonders bevorzugt ist dabei eine Ausführungsform, bei der der Klemmbügel axial zwischen einem Kommutator des Elektromotors und dem Wälzlager angeordnet ist. Darüber hinaus führt die Erfindung auf einen Scheibenwischerantrieb für Kraftfahrzeuge. Der Scheibenwischerantrieb zeichnet sich durch einen nach dem Konzept der Erfindung ausgebildeten Elektromotor mit einem wie zuvor beschrieben ausgebildeten Klemmbügel aus. Die Lebensdauer eines derartigen Scheibenwischerantriebs bzw. eines wie zuvor beschrieben ausgebildeten Elektromotors ist durch die Minimierung von elektrischen Störungen im Vergleich zu bekannten Scheibenwischerantrieben bzw. Elektromotoren (wesentlich) erhöht.

Zudem führt die Erfindung auf die Verwendung eines Klemmbügels, umfassend eine Erhebung mit Oberflächenstruktur zum axialen Sichern einer Ankerwelle eines Elektromotors, insbesondere eines Elektromotors eines Scheibenwischerantriebs, in Kraftfahrzeugen.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine perspektivische Darstellung eines mit einem Klemmbügel ausgestatteten Elektromotors eines Scheibenwischerantriebs,
- Fig. 2: ein mögliches Ausführungsbeispiel eines Klemmbügels mit zwei seitlich einer randseitigen Ausnehmung angeordneten Erhebun- gen, jeweils aufweisend eine regelmäßige Oberflächenstruktur (Waffelstruktur), und
- Fig. 3: einen Klemmbügel gemäß dem Stand der Technik.

In den Figuren sind gleiche Elemente und Elemente mit der gleichen Funktion mit den gleichen Bezugszeichen gekennzeichnet.

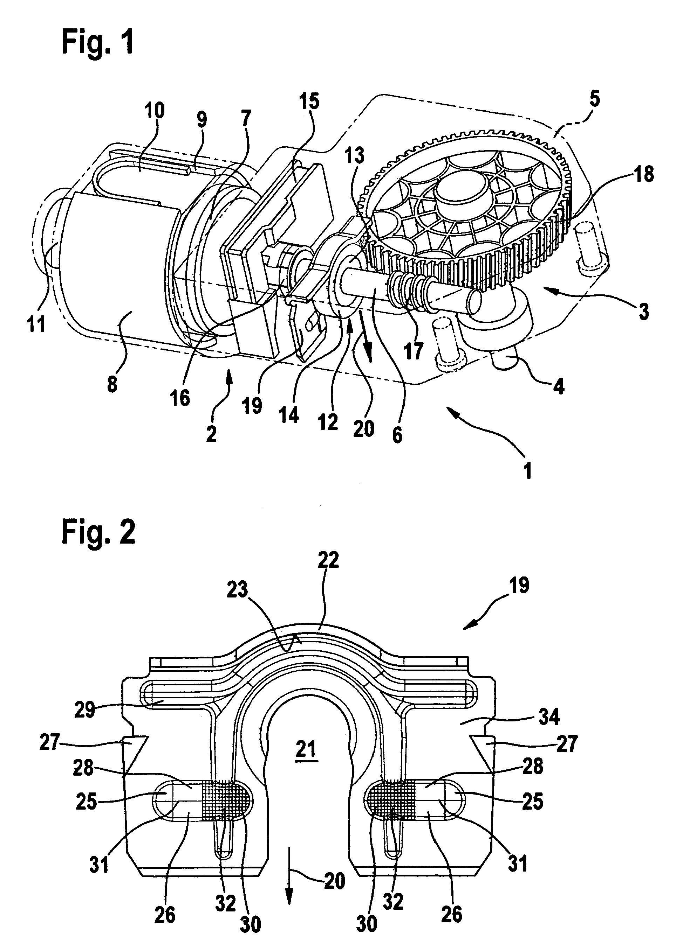

In Fig. 1 ist in einer perspektivischen, teilweise transparenten Darstellung ein Scheibenwischerantrieb 1 mit einem Elektromotor 2 und einem als Schneckengetriebe ausgebildeten Getriebe 3 gezeigt. Von dem Getriebe 3 wird eine Abtriebswelle 4 angetrieben, die aus einem Scheibenwischerantriebsgehäuse 5 herausragt.

Der Elektromotor 2 umfasst ein drehfest auf einer Ankerwelle 6 sitzendes Ankerpaket 7. Diesem sind zwei schalenförmige Permanentmagnete 8, 9 zugeordnet, die mit Hilfe von Abstandsklammern 10 in Umfangsrichtung voneinander beabstandet sind.

Die Ankerwelle 6 ist in der Zeichnungsebene links gelagert mittels eines als Radiallager ausgebildeten Sinterlagers 11 sowie mit Axialabstand hierzu mit Hilfe eines als Kugellager ausgebildeten Wälzlagers 12, umfassend einen inneren, drehfest mit der Ankerwelle 6 verbundenen Laufring 13 sowie einen radial benachbarten äußeren Laufring 14. Radial zwischen dem inneren Laufring 13 und dem äußeren Laufring 14 sind aus Übersichtlichkeitsgründen nicht gezeigte Wälzkörper angeordnet.

Axial zwischen dem Ankerpaket 7 und dem Wälzlager 12 ist ein Bürstenhalter 15 sowie ein mit diesem in bekannter Weise zusammenwirkender, drehfest auf der Ankerwelle 6 sitzender Kommutator 16 angeordnet.

Endseitig auf der Ankerwelle 6 sitzt eine Getriebeschnecke 17, die in einem drehmomentübertragenden Eingriff mit einem Abtriebszahnrad 18 ist, welches drehfest mit der Abtriebswelle 4 verbunden ist.

Wie sich weiterhin aus Fig. 1 ergibt, ist die Ankerwelle 6 gegen axiales Verstellen mit Hilfe eines Klemmbügels 19 (Klemmbrille) gesichert. Bei dem Klemmbügel 19 handelt es sich um ein Stanzbiegeteil aus Stahlblech, welches in einer Montagerichtung 20 montiert ist. Der äußere Laufring 14 des Wälzlagers 12 stützt sich in axialer Richtung an dem flachen Klemmbügel 19 ab.

Wie sich aus Fig. 2 ergibt, ist der, eine Grundebene 34 aufweisende Klemmbügel 19 im Wesentlichen U-förmig konturiert und weist eine randseitig in die Montagerichtung 20 offene Ausnehmung 21 auf, deren Breitenerstreckung quer zur Montagerichtung 20 größer ist als der Durchmesser der Ankerwelle 6.

Der Klemmbügel 19 gemäß Fig. 2 weist einen U-förmig konturierten Anlagewulst 22 auf, der stirnseitig eine Anlagefläche 23 zum Abstützen des Wälzlagers 12, genauer des äußeren Laufrings 14, aufweist.

Der Anlagewulst 22 hat neben der Bereitstellung der Anlagefläche 23 für den äuβeren Laufring 14 die Aufgabe der Versteifung des flachen Klemmbügels 19. Hierzu erstreckt sich der Anlagewulst 22 über die Umfangskontur des äußeren Laufrings 14 hinaus und zwar in zwei entgegengesetzte Richtungen quer zur Montagerichtung 20 nach außen sowie in Montagerichtung 20.

Wie sich weiter aus Fig. 2 ergibt, ist der Klemmbügel 19 in einem in der Zeichnungsebene oberen Bereich zur Durchführung der Ankerwelle 6 nach innen abgerundet ausgebildet, um die Steifigkeit zu erhöhen.

Auf beiden Seiten der Ausnehmung 21 befindet sich jeweils eine sich über die Grundebene 34 hinaus erstreckende Erhebung 25, wobei die Erhebungen 25, in diesem Ausführungsbeispiel der gesamte Klemmbügel 19, spiegelsymmetrisch zu einer aus Übersichtlichkeitsgründen nicht eingezeichneten, die Montagerichtung 20 aufnehmenden und die Ausnehmung 21 durchsetzenden Spiegelebene ausgebildet sind.

Jede Erhebung 25 umfasst eine in Montagerichtung 20 gerichtete Anlaufseite 26 sowie eine entgegen der Montagerichtung 20 orientierte Ablaufseite 27. Die Erhebungen 25 sind in dem gezeigten Ausführungsbeispiel im Wesentlichen in der Art einer halben, längsgeschnittenen Medikamentenkapsel ausgeformt.

An jeder Anlaufseite 26 ist eine konvex gekrümmte Anlauframpe 28 realisiert, wobei sich die Anlauframpen 28 quer zur Montagerichtung 20 nach außen erstrecken.

In Fig. 2 ist weiterhin zu erkennen, dass der Klemmbügel 19 randseitig mit je einer Klemmkralle 29 versehen ist, um ein unbeabsichtigtes Lösen des Klemmbügels 19 aus einer Montageposition zu verhindern.

Wie sich aus Fig. 2 weiter ergibt, sind beide Erhebungen 25 etwa hälftig mit einer Oberflächenstruktur 30 versehen, wobei es sich in dem gezeigten Ausführungsbeispiel um eine regelmäßige Waffelstruktur handelt. Die Oberflächenstruktur 30 befindet sich sowohl auf der Anlaufseite 26 und der Ablaufseite 27 als auch im Scheitelbereich 31 jeder Erhebung 25.

Die Oberflächenstruktur 30 umfasst in dem gezeigten Ausführungsbeispiel, zumindest näherungsweise, quadratisch oder alternativ rautenförmig in der Art einer Waffelstruktur konturierte Strukturelemente 32, die derart dimensioniert sind, dass die ggf. bei der Montage entstehenden Späne eine kritische-Größe nicht überschreiten, also kleiner sind als ein minimaler Abstand zwischen elektrischen Kontakten des Elektromotors 2.

Durch die gezeigte Oberflächenstruktur 30 können Späne ggf. vollständig vermieden werden, da sich die Oberflächenstruktur 30 bei der Montage vergleichsweise leicht verformen lässt, wodurch eine plastische Verformung der Oberflächenstruktur bzw. der Strukturelemente 32 in die Strukturelemente 32 voneinander trennenden Gräben hinein auftreten kann.

Der Oberflächenstruktur 30 kann beispielsweise mechanisch, insbesondere während des Stanzbiegeprozesses, zur Herstellung des Klemmbügels 19 in die Erhebungen 25 eingebracht werden. Zusätzlich oder alternativ kann die Oberflächenstruktur durch Laserbearbeitung, Bestrahlen, insbesondere Sand- oder Kugelbestrahlen, oder chemisch, insbesondere durch Ätzen, eingebracht werden.

Bei einer nicht dargestellten, ebenfalls realisierbaren Ausführungsvariante sind die Erhebungen 25 vollständig mit einer Oberflächenstruktur bedeckt, wobei dies nicht zwingend erforderlich ist - wesentlich ist, dass die bei der Montage in Kontakt mit dem Wälzlager 12 bzw. dem äußeren Laufring 14 tretende Bereiche mit der Oberflächenstruktur 30 zur Vermeidung zu großer Späne versehen sind.

## Patentansprüche

1. Klemmbügel zum axialen Sichern einer Ankerwelle (6) eines Elektromotors (2), mit einer randseitig offenen Ausnehmung (21) zum Aufschieben des Klemmbügels (19) über die Ankerwelle (6) in eine Montagerichtung (20), mit mindestens einer seitlich der Ausnehmung (21) angeordneten, eine in Montagerichtung (20) weisende Anlaufseite (26) und eine entgegen der Montagerichtung (20) weisende Ablaufseite (27) aufweisenden Erhebung (25), mit einer auf der Anlaufseite (26) ausgebildeten Anlauframpe (28) zum Entlanggleiten an einem äußeren Laufring (14) eines Lagers (12) und mit einer Anlagefläche (23) zum axialen Abstützen des äußeren Laufringes (14), wobei die Erhebung (25), zumindest abschnittsweise, mit einer Oberflächenstruktur (30) versehen ist,
**dadurch gekennzeichnet,**
**dass** die Oberflächenstruktur (30) Strukturelemente (32) aufweist, die derart dimensioniert sind, dass die maximalen Abmessungen von bei der Montage entstehenden Spänen geringer sind als ein minimaler Abstand zwischen mindestens zwei elektrischen, insbesondere nicht isolierten, Kontakten eines mit dem Klemmbügel (19) versehenen Elektromotors (2).

2. Klemmbügel nach Anspruch 1
**dadurch gekennzeichnet,**
**dass** die maximalen Durchmesser der Strukturelemente (32) kleiner sind als 2mm, vorzugsweise kleiner ist als 1 mm.

3. Klemmbügel nach einem der vorhergehenden Ansprüche,
**dadurch gekennzeichnet,**
**dass** die Oberflächenstruktur (30) auf der Anlaufseite (26) und/oder der Ablaufseite (27) und/oder im Scheitelbereich (31) der Erhebung (25) vorgesehen ist.

4. Klemmbügel nach einem der vorhergehenden Ansprüche,
**dadurch gekennzeichnet,**
**dass** die Oberflächenstruktur (30) regelmäßig, insbesondere rechteckig, vorzugsweise quatdratisch, konturierte Strukturelemente (32) aufweist.

5. Klemmbügel nach einem der vorhergehenden Ansprüche,
**dadurch gekennzeichnet,**
**dass** die Oberflächenstruktur (30) durch Prägen, Strahlen, insbesondere Kugelstrahlen, und/oder Bürsten und/oder durch Laserbearbeitung und/oder chemisch hergestellt ist.

6. Klemmbügel nach einem der vorhergehenden Ansprüche,
**dadurch gekennzeichnet,**
**dass** auf beiden Seiten der Ausnehmung (21) jeweils eine eine Oberflächenstruktur (30) aufweisende Erhebung (25) vorgesehen ist.

7. Elektromotor, vorzugsweise für einen Scheibenwischerantrieb (1), mit einem einen äußeren Laufring (14) aufweisenden Lager (12) und einem, vorzugsweise axial zwischen einem Kommutator (16) und dem Lager (12) angeordneten, Klemmbügel (19) nach einem der vorhergehenden Ansprüche, der den äußeren Laufring (14) axial abstützt.

8. Scheibenwischerantrieb mit einem Elektromotor (2) nach Anspruch 7.

9. Verwendung eines Klemmbügels (19) nach einem der Ansprüche 1 bis 6 zum axialen Sichern einer Ankerwelle (6) eines Elektromotors (2).

## Claims

1. Clamping clip for axially securing an armature shaft (6) of an electric motor (2), having a recess (21), which is open at the edge, for pushing the clamping clip (19) over the armature shaft (6) in a mounting direction (20), having at least one projection (25) which is arranged to the side of the recess (21) and has a run-on side (26) which points in the mounting direction (20) and a run-off side (27) which points in the opposite direction to the mounting direction (20), having a run-on ramp (28), which is formed on the run-on side (26), for sliding along an outer race (14) of a bearing (12) and having a bearing area (23) for axially supporting the outer race (14), with the projection (25) being provided, at least in sections, with a surface structure (30),
**characterized**
**in that** the surface structure (30) has structural elements (32) which are of such a size that the maximum dimensions of chips which are produced during mounting are smaller than a minimum distance between at least two electrical, in particular non-insulated, contacts of an electric motor (2) which is provided with the clamping clip (19).

2. Clamping clip according to Claim 1, **characterized in that** the maximum diameters of the structural elements (32) are less than 2 mm, preferably less than 1 mm.

3. Clamping clip according to either of the preceding claims, **characterized in that** the surface structure (30) is provided on the run-on side (26) and/or the run-off side (27) and/or in the apex region (31) of the projection (25).

4. Clamping clip according to one of the preceding claims, **characterized in that** the surface structure (30) has regular, in particular rectangular, preferably square, contoured structural elements (32).

5. Clamping clip according to one of the preceding claims, **characterized in that** the surface structure (30) is produced by embossing, blasting, in particular shot-blasting, and/or brushing and/or by laser processing and/or chemically.

6. Clamping clip according to one of the preceding claims, **characterized in that** a projection (25) which has a surface structure (30) is provided on each of the two sides of the recess (21).

7. Electric motor, preferably for a windscreen wiper drive (1), having a bearing (12), which has an outer race (14), and a clamping clip (19) according to one of the preceding claims which is arranged, preferably axially, between a commutator (16) and the bearing (12) and axially supports the outer race (14).

8. Windscreen wiper drive having an electric motor (2) according to Claim 7.

9. Use of a clamping clip (19) according to one of Claims 1 to 6 for axially securing an armature shaft (6) of an electric motor (2).

## Revendications

1. Etrier de serrage pour la fixation axiale d'un arbre d'armature (6) d'un moteur électrique (2), comprenant un évidement (21) ouvert du côté du bord pour pousser l'étrier de serrage (19) sur l'arbre d'armature (6) dans une direction de montage (20), au moins un rehaussement (25) disposé latéralement par rapport à l'évidement (21), présentant un côté d'entrée (26) tourné dans la direction de montage (20) et un côté de sortie (27) tourné dans le sens opposé à la direction de montage (20), une rampe d'entrée (28) réalisée sur le côté d'entrée (26) pour glisser le long d'une bague de roulement extérieure (14) d'un palier (12) et une surface d'appui (23) pour supporter axialement la bague de roulement extérieure (14), le rehaussement (25) étant pourvu, au moins en partie, d'une structure de surface (30),
**caractérisé en ce que**
la structure de surface (30) présente des éléments structurels (32) qui sont dimensionnés de telle sorte que les dimensions maximales de copeaux produits lors du montage soient inférieures à une distance minimale entre au moins deux contacts électriques, notamment non isolés, d'un moteur électrique (2) pourvu de l'étrier de serrage (19).

2. Etrier de serrage selon la revendication 1, **caractérisé en ce que**
le diamètre maximal des éléments structurels (32) est inférieur à 2 mm, de préférence inférieur à 1 mm.

3. Etrier de serrage selon l'une quelconque des revendications précédentes,
**caractérisé en ce que**
la structure de surface (30) est prévue sur le côté d'entrée (26) et/ou sur le côté de sortie (27) et/ou dans la région du sommet (31) du rehaussement (25).

4. Etrier de serrage selon l'une quelconque des revendications précédentes,
**caractérisé en ce que**
la structure de surface (30) présente des éléments structurels (32) de contour régulier, notamment rectangulaire, de préférence carré.

5. Etrier de serrage selon l'une quelconque des revendications précédentes,
**caractérisé en ce que**
la structure de surface (30) est fabriquée par gaufrage, projection de particules, en particulier grenaillage, et/ou par brossage et/ou par traitement au laser et/ou par traitement chimique.

6. Etrier de serrage selon l'une quelconque des revendications précédentes,
**caractérisé en ce que**
des deux côtés de l'évidement (21) est à chaque fois prévu un rehaussement (25) présentant une structure de surface (30).

7. Moteur électrique, de préférence pour un entraînement d'essuie-glace (1), comprenant un palier (12) présentant une bague de roulement extérieure (14) et un étrier de serrage (19) disposé de préférence axialement entre un commutateur (16) et le palier (12), selon l'une quelconque des revendications précédentes, qui supporte axialement la bague de roulement extérieure (14).

8. Entraînement d'essuie-glace comprenant un moteur électrique (2) selon la revendication 7.

9. Utilisation d'un étrier de serrage (19) selon l'une quelconque des revendications 1 à 6, pour la fixation axiale d'un arbre d'armature (6) d'un moteur électrique (2).
